Europäisches Patentamt

European Patent Office

Office européen des brevets

(11) Publication number: **0 025 464**
**B1**

(12) **EUROPEAN PATENT SPECIFICATION**

(45) Date of publication of patent specification: **27.06.84**

(51) Int. Cl.³: **F 16 G 5/16, F 16 G 1/26**

(21) Application number: **79301894.6**

(22) Date of filing: **14.09.79**

(54) **Driving belts.**

(43) Date of publication of application:
**25.03.81 Bulletin 81/12**

(45) Publication of the grant of the patent:
**27.06.84 Bulletin 84/26**

(84) Designated Contracting States:
**AT BE CH DE FR GB IT NL SE**

(56) References cited:
**GB - A - 480 412**
**GB - A - 565 672**
**GB - A - 714 922**
**GB - A - 715 510**
**US - A - 2 969 686**
**US - A - 4 009 620**

(73) Proprietor: **BRAMMER TRANSMISSIONS LIMITED**
**Hudson Road**
**Leeds West Yorkshire, LS9 7DF (GB)**

(72) Inventor: **Greenwood, John**
**9, West Park Crescent**
**Leeds West Yorkshire, LS8 2HE (GB)**

(74) Representative: **Harrison, Michael Robert et al,**
**URQUHART-DYKES & LORD 11th Floor Tower**
**House Merrion Way**
**Leeds LS2 8PB West Yorkshire (GB)**

Courier Press, Leamington Spa, England.

## Description

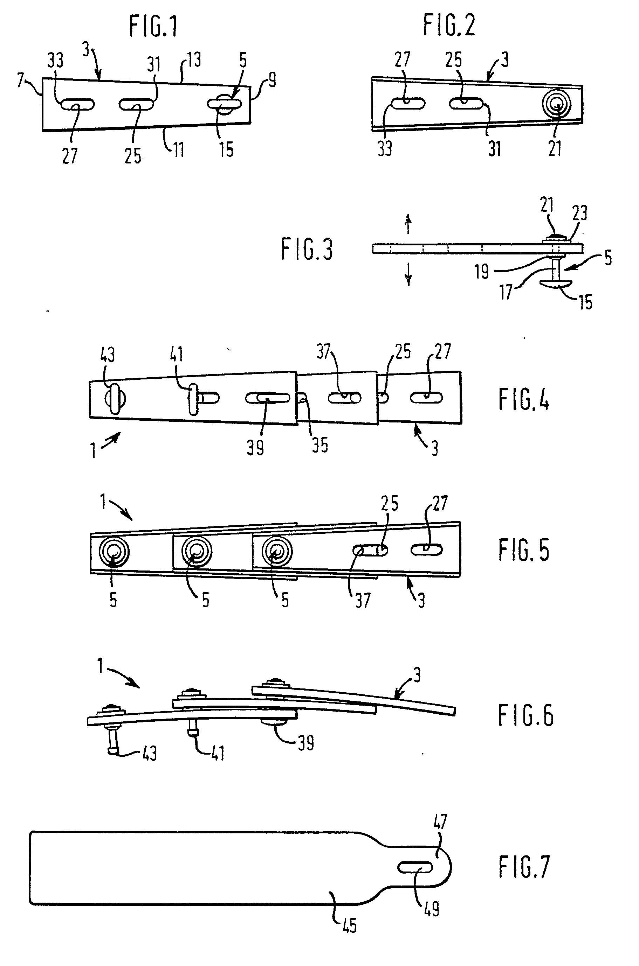

This invention relates to driving belts composed of detachable links formed from flexible material, the links being arranged in layers or steps one upon the other. Such a driving belt is described in U.K. patent specification No. 340,065. Currently a driving belt of this type is manufactured with links made from rubberised laminated fabric, each link being joined to overlapping links by a steel stud. The links are similar to that shown in Figures 3 and 4 of the above-mentioned specification except that the stud is positioned close to the narrow end of the link and the perforations are located near the wider ends. The belt may have, for example, three layers of links. This link-by-link construction makes the belts both flexible and adjustable.

Although one of the advantages of a driving belt as described in U.K. patent specification No. 340,065 is that the links are detachable and interchangeable so that belting can be made up to any required length, the manipulations required to insert or remove one or more links are quite difficult and require a certain amount of skill on the part of the person carrying out the operation.

Attempts to improve the belting shown in U.K. patent specification No. 340,065 have resulted in the belt disclosed in British patent specifications Nos. 565,672 and 714,922. The belts described are similar to those in U.K. patent specification 340,065. The belt disclosed in U.K. patent specification 565,672 is made up of links having a stud fastened at one end and two slots equally spaced along the link towards the other end of the link. The belt disclosed in U.K. patent specifications No. 714,922 has links with three slots along its length, a stud passing through the slots to fasten the links together. The major problem with both these belts is that when the belts are not tensioned, longitudinal variation between adjacent links is allowed. This means that the links can then work themselves free and the belt may break.

According to the present invention there is provided a driving belt comprising detachable, flexible, elongate links arranged in a staggered, overlapping relationship, each link having attached thereto a pendant, headed stud, first and second perforations in each link spaced from the stud thereof along the longitudinal axis of the link, the first perforation of each link being located between the stud thereof and the second perforation thereof, the first link being attached to a second, adjacent, overlapping link and to a third link overlapping adjacent said second link by the stud of the first link extending through the first perforation of the second link and through the second perforation of the third link, each perforation having an elongated shape along the length of the associated link and having opposite ends, the head of each stud being shaped to allow the stud head to pass through the perforations without substantial lateral distortion of each perforation only upon alignment thereof, the stud of each link being rotatable between a position where the head thereof is aligned with the perforations of the link and a position where the stud head is not so aligned, characterised in that the shank of the stud of the first link is engaged by that end of the first perforation of the second link which is closer to the stud of said second link, and in that this shank is also engaged by that end of the second perforation of the third link which is remote from the stud of said third link.

Thus the present invention is particularly advantageous in the case where the material of the link is such that the link cannot be easily distorted in the lateral direction. A material which has the necessary strength of flexibility in a direction out of the plane of the link is a solid woven polyester which is impregnated with polyurethane. Since the lack of lateral flexibility is of no consequence in belting in accordance with the present invention this material is suitable for use in the invention.

The flexibility of the material of the links and the longitudinal extension of the perforations allow the shank of a stud to move to some extent in perforations through which it passes, thereby permitting the belt to adapt itself to the perimeter of a pulley over which the belt is required to work.

Preferably the head of each stud and each perforation is oblong in plan. More preferably the longitudinal axis of the perforation lies along or parallel to the longitudinal axis of the link.

Preferably the ends of each link are of different widths so that the belt is V-shaped in cross-section when in use. More preferably the sides of each link taper inwardly in a direction opposite to the pendant end of its associated stud. The stud is preferably attached to its associated link at the narrower of the ends of the link.

An embodiment of the present invention will now be described, by way of example only, and with reference to the accompanying drawings, in which:—

Figure 1 is a bottom plan view of a link of belting in accordance with the present invention;

Figure 2 is a top plan view of the link of Figure 1;

Figure 3 is a side elevation of the link of Figure 1;

Figure 4 is a bottom plan view of a length of belting composed of three links such as are shown in Figure 1;

Figure 5 is a top plan view of the length of belting of Figure 4;

Figure 6 is a side elevation of the length of belting of Figure 4; and

Figure 7 is a plan view of a tool which may be used in connection with belting of the present invention.

Referring to the drawings, drive belting 1 comprises a series of links 3, each link being connected to two further links by means of stud 5 so that the belt may be considered as having three layers of links.

Each link 3 comprises an elongate piece of material having parallel ends and sides which taper inwardly from one end 7 to the other end 9. The material is a solid woven polyester impregnated with polyurethane. Such material allows flexibility of the link in a direction out of the plane of the link and is shown by the arrows in Figure 3, but substantially no flexibility or indeed stretching or material in the plane of the link. It should be emphasised that other materials can be used, for instance the sort of rubberised laminated fabric which is currently used for known link belting.

Tapering sides 11 and 13 of link 3 are each chamfered, being inclined inwardly in a direction which is upwards with reference to Figure 3. This assists the accommodation of the drive belting in the V-shaped groove of the pulley, although, as described in U.K. patent specification No. 340,065, it is not necessary that the chamfer angle be equal to the angle of the groove of the pulley.

Close to the narrow end 9 of link 3 there is provided the stud 5. Stud 5 has a head 15 located at the end of shank 17 which depends downwardly (referring to Figure 3) from the body of the link 3. Shank 17 carries a flange 19 which abuts against the lower surface of the body of link 3. Shank 17 continues above flange 19 through a hole in the body of link 3 and its upper end 21 is riveted over washer 23 which abuts the upper surface of the body of link 3. Thus stud 5 is firmly secured to the body of link 3.

As best seen in Figure 1 the head 15 of stud 5 is oblong in plan and the significance of this will appear below.

Link 3 is perforated by two holes 25 and 27 which are located on the longitudinal axis of link 3. The shape and size of holes 25 and 27 is such as to allow the head of a stud similar to stud 5 to be a reasonably close fit within these holes.

A belt may now be assembled from links 3 as shown in Figures 4 to 6. In these figures the links 3 are identical to the links shown in Figure 1. The reference numbers in Figure 1 are used to refer to similar parts on each link shown in Figures 4 to 6. However some of the studs and perforations of the first and second links are given different reference numbers to distinguish from the third link to clarify the assembly and disassembly of the belt.

In order to assemble a belt from links 3, a first link is taken and the stud head 41 of a second link is then pushed through perforation 25 of the first link. A third link is taken and the stud head 39 of the third link is then pushed through perforation 35 of the second link and then through perforation 27 of the first link. The result is then as shown in Figures 4 to 6. It should be noted that the spacing apart of perforations 25 and 27 is such that when the stud of the third link is inserted through the perforation 35 of the second link and the perforation 27 of the first link the shank of the stud abuts against end 31 of said perforation 25 and against end 33 of perforation 27. Accordingly, the three links are then held together fairly rigidly against the longitudinal movement of any of the studs relative to each other.

A further link may be added to the arrangement shown in Figures 4 to 6 simply by pushing the head of the stud of the further link through perforation 25 and 37. The length of the belt may be increased to any desired length simply by adding links in this way.

Figure 4 shows the three links after the head of the stud of the third link has been pushed through the perforations in the first two links. Accordingly the head 39 of the stud is shown aligned longitudinally relative to the links. In order to "lock" the links together, it is necessary to rotate the stud through 90° so that the stud head 39 lies in a similar orientation to stud head 41 of the second link and stud head 43 of the first link. This may be achieved by means of a simple tool such as that shown in Figure 7. The tool 45 comprises a strip of metal having a narrowed end 47, the end 47 having located therein a perforation 49 which is of the same shape and dimensions as the perforations in the links. Accordingly the perforation 49 may be located around stud head 39 and a small force applied to the tool will rotate the stud 90° against the frictional forces between the material of the third link and shank stud.

In order to disassemble the three link arrangement referred to above, it is merely necessary to rotate the stud heads 39 and 41 to the orientation of stud head 39 as shown in Figure 4. The end 47 of tool 45 is then inserted between the first and second links at a location between the studs of the second and third links. Levering of the tool will then cause the first link to lift over stud head 41. The first link can then be pulled over the stud head 39. The second link is then separated from the third link simply by drawing stud head 39 through the appropriate perforation of the second link.

Simple operations similar to those described above enable one or more links to be inserted or extracted from a continuous driving belt formed of such links.

Hence, substantially no skill is required in the case of belting of the present invention, and this is a considerable advantage for users of the belting.

**Claims**

1 A driving belt (1) comprising detachable, flexible, elongate links (3) arranged in a staggered overlapping relationship, each link having attached thereto a pendant, headed stud (5), first (25) and second (27) perforations in each link (3) spaced from the stud (5) thereof along the longitudinal axis of the link (3), the first perforation (25) of each link (3) being located between the stud (5) thereof and the second perforation (27) thereof, the first link being attached to a second, adjacent, overlapping link and to a third link overlapping adjacent said second link by the stud (5) of the first link extending through the first perforation (25) of the second link and through the second perforation (27) of the third link, each perforation (25, 27) having an elongated shape along the length of the associated link (3) and having opposite ends, the head (15) of each stud being shaped to allow the stud head (15) to pass through the perforations (25, 27) without substantial lateral distortion of each perforation only upon alignment thereof, the stud (5) of each link being rotatable between a position where the head (15) thereof is aligned with the perforations of the link (3) and a position where the stud head (15) is not so aligned, characterised in that the shank (17) of the stud (5) of the first link is engaged by that end (31) of the first perforation (25) of the second link which is closer to the stud (5) of said second link, and in that this shank (17) is also engaged by that end (33) of the second perforation (27) of the third link which is remote from the stud (5) of said third link.

2. A driving belt according to claim 1 characterised in that the head (15) of each stud (5) and each perforation (25, 27) is oblong in plan.

3. A driving belt according to claim 2 characterised in that the longitudinal axis of the perforations (25, 27) lies along or parallel to the longitudinal axis of the link (3).

4. A driving belt according to any of the preceding claims characterised in that the ends (7, 9) of each link (3) are of different widths.

5. A driving belt according to claim 4 characterised in that the stud (5) is attached to its associated link at the narrower (9) of said ends.

6. A driving belt according to any of the preceding claims characterised in that the sides of said links (3) taper inwardly in a direction opposite to the pendant end of its associated stud (5).

7. A driving belt according to any of the preceding claims characterised in that each link (3) is made of solid woven polyester impregnated with polyurethane.

**Revendications**

1. Courroie de transmission (1) comprenant des maillons allongés, souples et détachables (3), disposés à chevauchement étagé les uns par rapport aux autres, chaque maillon comportant un rivet pendant à tête (5), une première (25) et une deuxième (27) perforations ménagées dans le maillon (3) le long de son axe longitudinal à distance du rivet (5), la première perforation (25) de chaque maillon (3) étant disposée entre le rivet (5) et la deuxième perforation (27), la premier maillon étant fixé à un deuxième maillon adjacent chevauchant et à un troisième maillon chevauchant adjacent au deuxième maillon, par le rivet (5) du premier maillon qui passe dans la première perforation (25) du deuxième maillon et dans la deuxième perforation (27) du troisième maillon, chaque perforation (25, 27) ayant une forme allongée sur la longueur de maillon associé et ayant des extrémités opposées la tête (15) de chaque rivet étant conformé de manière à pouvoir passer dans les perforations (25, 27) sans déformation latérale sensible de chaque perforation uniquement après alignement, le rivet (5) de chaque maillon pouvant pivoter entre une position dans laquelle sa tête (15) est alignée avec le perforations du maillon (3) et une position dans laquelle la tête (15) du rivet n'est pas dans un tel alignement, ladite courroie de transmission étant caractérisée en ce que la tige (17) du rivet (5) du premier maillon vient en engagement avec l'extrémité (31) de la première perforation (25) du deuxième maillon qui est la plus proche du rivet (5) du deuxième maillon, et en ce que cette tige (17) vient également en engagement avec l'extrémité (33) de la deuxième perforation (27) du troisième maillon qui est la plus éloignée du rivet (5) de troisième maillon.

2. Courroie de transmission suivant la revendication 1, caractérisée en ce que la tête (15) de chaque rivet (5) et chaque perforation (25, 27) sont oblongues en plan.

3. Courroie de transmission suivant la revendication 2, caractérisée en ce que l'axe longitudinal des perforations (25, 27) s'étend le long du ou parallèlement à l'axe longitudinal du maillon (3).

4. Courroie de transmission suivant l'une quelconque des revendications précédentes, caractérisée en ce que les extrémités (7, 9) de chaque maillon (3) sont de largeur différente.

5. Courroie de transmission suivant la revendication 4, caractérisée ce que le rivet (5) est fixé à son maillon associé à la plus étroite des extrémités du maillon.

6. Courroie de transmission suivant l'une quelconque des revendications précédentes, caractérisée en ce que les côtés des maillons (3) s'effilent vers l'interieur dans une direction opposée à l'extrémité pendante du rivet (5) associé.

7. Courroie de transmission suivant l'une quelconque des revendications précédentes, caractérisée en ce que chaque maillon (3) est en polyester plein tissé imprégne de polyuréthane.

**Patentansprüche**

1. Ein Antriebsriemen (1) aus demontierbaren, flexiblen, länglichen Gliedern (3), die in einer gestaffelten, überlappenden Beziehung angeordnet sind, wobei jedes Glied an sich befestigt eine wegstehenden Kopfbolzen (5), erste (25) und zweite (27) Lochungen in jedem Glied (3) aufweist, die vom Bolzen (5) desselben entlang der Längsachse des Gliedes (3) im Abstand angeordnet sind, wobei die erste Lochung (25) jedes Gliedes (3) zwischen dem Bolzen (5) desselben und der zweiten Lochung (27) desselben angeordnet ist, das erste Glied an ein zweites, benachbartes, überlappendes Glied und an eine drittes überlappendes, dem zweiten Glied benachbartes Glied durch den Bolzen (5) des ersten Gliedes angefügt ist, der sich durch die erste Lochung (25) des zweiten Gliedes und durch die zweite Lochung (27) des dritten Gliedes erstreckt, jede Lochung (25, 27) entlang der Länge des zugeordneten Gliedes (3) eine längliche Form besitzt und gegenüberliegende Enden hat, der Kopf (5) jedes Gliedes so geformt ist, daß der Bolzenkopf (15) im wesentlichen ohne seitliche Verformung jeder Lochung bloß bei Ausrichtung desselben durch die Lochungen (25, 27) treten kann, und wobei der Bolzen (5) jedes Gliedes zwischen einer Stellung, in welcher der Kopf (15) desselben mit den Lochungen des Gliedes (3) ausgerichtet ist, und einer Stellung, in welcher der Bolzenkopf (15) nicht so ausgerichtet ist, verdrehbar ist, dadurch gekennzeichnet, daß der Schaft (17) des Bolzens (5) des ersten Gliedes von dem Ende (31) der ersten Lochung (25) des zweiten Gliedes berührt wird, das den Bolzen (5) des zweiten Gliedes näher ist und daß dieser Schaft 17 auch von dem Ende (33) der zweiten Lochung (27) des Dritten Gliedes berührt wird, das vom Bolzen (5) des dritten Gliedes entfernt ist.

2. Ein Antriebsriemen nach Anspruch 1, dadurch gekennzeichnet, daß der Kopf (15) jedes Bolzens (5) und jede Lochung (25, 27) in Draufsicht länglich ist.

3. Ein Antriebsriemen nach Anspruch 2, dadurch gekennzeichnet, daß die Längsachse der Lochungen (25, 27) längs oder parallel zur Längsachse des Gliedes (3) liegt.

4. Ein Antriebsriemen nach einem der vorhergehenden Ansprüche, dadurch gekennzeichnet, daß die Enden (7, 9) jedes Gliedes (3) verschiedene Breiten haben.

5. Ein Antriebsriemen nach Anspruch 4, dadurch gekennzeichnet, daß der Bolzen (5) an seinem zugeordneten Glied am schmaleren (9) der Enden befestigt ist.

6. Ein Antriebsriemen nach einem der vorhergehenden Ansprüche, dadurch gekennzeichnet, daß die Seiten des Gliedes (3) nach innen in einer Richtung, die dem abstehenden Ende seines zugeordneten Bolzens (5) gegenüberliegt, geneigt sind.

7. Ein Antriebsriemen nach einem der vorhergehenden Ansprüche, dadurch gekennzeichnet, daß jedes Glied (3) aus dichtgewebtem Polyester, das mit Polyurethan imprägniert ist, hergestellt ist.

**0 025 464**

FIG.1

FIG.2

FIG.3

FIG.4

FIG.5

FIG.6

FIG.7